Europäisches Patentamt

European Patent Office

Office européen des brevets

(19)

(11) Veröffentlichungsnummer : **0 194 701**
**B1**

(12) **EUROPÄISCHE PATENTSCHRIFT**

(45) Veröffentlichungstag der Patentschrift :
09.08.89

(21) Anmeldenummer : 86103483.3

(22) Anmeldetag : 14.03.86

(51) Int. Cl.⁴ : **C 23 C 4/10**, C 23 C 4/12,
C 23 C 4/18

(54) **Verfahren zur Herstellung von Oberflächenschutzschichten.**

(30) Priorität : 14.03.85 DE 3509242

(43) Veröffentlichungstag der Anmeldung :
17.09.86 Patentblatt 86/38

(45) Bekanntmachung des Hinweises auf die Patenterteilung : 09.08.89 Patentblatt 89/32

(84) Benannte Vertragsstaaten :
AT BE CH DE FR GB LI NL SE

(56) Entgegenhaltungen :
WO--A--84 /033 06
DE--A-- 1 621 290
DE--A-- 3 341 034

(73) Patentinhaber : Hermann C. Starck Berlin GmbH & Co. KG
Eschenallee 36
D-1000 Berlin 19 (DE)

(72) Erfinder : Eschnauer, Heinz, Dr. Dipl.-Chem.
Gelnhäuser Strasse 15
D-6463 Freigericht 1 (DE)
Erfinder : Meinhardt, Helmut, Dr. Dipl.-Chem.
Laubenstrasse 21
D-7887 Laufenburg (DE)
Erfinder : Lugscheider, E., Prof. Dr. techn.
Bergstraat 38
NL-6291 AZ Vaals (NL)
Erfinder : Krautwald, Anno, Dipl.-Ing.
An den Frauenbrüdern 2
D-5100 Aachen (DE)

(74) Vertreter : Klingseisen, Franz, Dipl.-Ing. et al
Dr. F. Zumstein sen. Dr. E. Assmann Dr. R. Koenigsberger Dr. F. Zumstein jun. Dipl.-Ing. F. Klingseisen
Bräuhausstrasse 4
D-8000 München 2 (DE)

EP 0 194 701 B1

Jouve, 18, rue St-Denis, 75001 Paris, France

**Beschreibung**

Die Erfindung betrifft ein Verfahren zur Herstellung von Oberflächenschutzschichten mit Niob, Tantal und/oder Titan auf metallischen Trägerwerkstoffen durch thermisches Spritz- und Auftragsschweißen.

Oberflächenschutzschichten aus reinem Titan und/oder Niob und/oder Tantal sind für zahlreiche Anwendungsgebiete bekannt. Die Oberflächenbeschichtung mit den besonders korrosionsfesten reinen Metallen Niob und Tantal waren eine Verbesserung und Fortentwicklung des Behälter- und Armaturenbaus, deren Preis allerdings und die ungünstigen mechanischen Eigenschaften (Gewicht, Duktilität, Verarbeitungsprobleme, vor allem beim Verschweißen) den Bau massiver Werkstücke nur in besonderen Fällen erlaubte. Die Beschichtung von Trägerwerkstoffen, vornehmlich Stahl und Eisen mit Niob oder Tantal erfolgte nach dem Stand der Technik auf verschiedene Arten :

a) Die Sprengplattierung von Tantal auf Stahlplatten, eventuell mit einer Zwischenlauge aus Kupfer oder anderen Metallen, ist für große, glatte Flächen wohl die gängigste Methode zur Herstellung von Verbundwerkstoffen aus Tantal und einem Trägermetall.

b) Die CVD-Beschichtung von Substratflächen, insbesondere bei komplizierten geometrischen Bauteilen, ist eine weitere Methode zur Oberflächenbeschichtung mit Niob bzw. Tantal.

c) Die kathodische Abscheidung von Titan, Niob oder Tantal aus deren Verbindungen während der Elektrolyse aus Salzschmelzen dient ebenfalls der Oberflächenbeschichtung von Substraten mit einer dichten korrosionsfesten Niob- oder Tantalschicht.

d) Thermisch aufgespritzte Titan-, Niob- oder Tantalbeschichtungen von Apparateteilen, von denen maximale Korrosionsfestigkeit verlangt wird, gelingen nach dem Stand der Technik durch Plasmaspritzen von Titan-, Niob- oder Tantalmetallpulver. Wegen der hohen Schmelztemperaturen der beiden Metalle und der enormen Reaktionsfähigkeit der heißen Metallpartikel arbeitet man in Niederdruck-Plasmaspritzanlagen unter Edelgasatmosphäre (Jahrbuch Oberflächentechnik, Band 38 (1982), S. 256 ff ; Band 40 (1984), S. 260 ff, S. 263 ff).

Diese allgemein bekannten Verfahren zur Beschichtung von Werkstoffen mit Niob oder Tantal haben neben den bereits genannten hohen Materialkosten der Schichtmetalle und dem hohen spezifischen Gewicht des Tantals im einzelnen folgende Nachteile :

Die Sprengplattierung ist neben hohen Kosten für die Werkstückbereitung und Herstellung von Niob- bzw. Tantalblechen auf bestimmte, geometrisch einfache Werkstücke beschränkt. Die Weiterverarbeitung sprengplattierter Halbzeuge durch Verformen (Tiefziehen, Kanten, Biegen, etc.) und Schweißen etc. ist nur unter Vorbehalten möglich.

Die CVD-Beschichtung liefert nur sehr dünne Schichten und ist auch nur für ganz spezielle Fälle mit geringen Abmessungen wirtschaftlich vertretbar. Ein weiterer Nachteil ist die vollständige Erwärmung des Werkstückes oder Formkörpers auf die Abscheidungstemperatur, wobei Diffusionsvorgänge zwischen Substrat und Oberflächenschicht bereits eine merkliche Rolle spielen, wenn die Phasen gegenseitig ineinander löslich sind.

Die Salzschmelzelektrolyse zur Beschichtung mit Niob oder Tantal erfordert ebenfalls eine hohe Substrattemperatur und ist wegen der unvermeidlichen Benetzung des Trägermaterials mit der Salzschmelze (Elektrolyt) nur für Hochtemperatur- und korrosionsbeständige Werkstoffe geeignet.

Beim thermischen Aufspritzen von porenfreien Titan-, Niob- oder Tantalschichten gilt ebenfalls die Einschränkung auf Werkstücke von geringeren Dimensionen, weil die Niederdruckverfahren (unter Schutzgas oder Vakuum) nur in geschlossenen Apparaturen durchführbar sind, deren Arbeitsvolumina natürlich begrenzt sind.

Wann immer man jedoch Niob- und/oder Tantal-armierte Verbundwerkstoffe als Korrosionsschutzmaterial anwendet, immer sind die reinen Metalle Niob oder Tantal, insbesondere dann, wenn sie (unlegiert) in reiner Form als Oberflächenschutzschicht dienen, wegen der Duktilität und geringen Verschleißbeständigkeit gegenüber Abrieb dann von Nachteil, wenn neben dem chemischen Angriff (Korrosion) auch noch abrasive Einflüsse auf die « weichen » Schutzschichten einwirken.

Verschleißschutzschichten, bei denen das Korrosionsproblem zumeist im Hintergrund steht, werden aus einer Vielzahl von Legierungssystemen auf Nickelbasis durch thermisches Spritzen oder Auftragsschweißen auf metallische Grundwerkstoffe hergestellt. Besondere Bedeutung haben dabei disperse Verbundsysteme, bei denen in einer möglichst homogenen Metallmatrix Hartstoffpartikel heterogen eingelagert werden. Solcherart hergestellte Verschleißschutzschichten haben als binäre Hartstoffe eine unbefriedigende chemische und thermische Beständigkeit, obwohl die zweckbestimmenden Eigenschaften als Verschleißschutzschichten ausreichen.

Es war daher die Aufgabe der vorliegenden Erfindung, Oberflächenschutzschichten auf Grundwerkstoffe mit den bekannten Verfahren aufzubringen, die zwar in erster Linie hervorragende Verschleißschutzeigenschaften besitzen, die aber zugleich ausreichend korrosionsfest sind, so daß sie sich gegen abrasiven und gleichzeitigen chemischen Angriff bewähren. Daß heißt, daß die vorstehend erwähnten Eigenschaften der korrosionsfesten Werkstoffe Titan, Niob und Tantal und die verschleißresistenten Eigenschaften der bekannten Nickel-Hartstoff-Verbundwerkstoffe kombiniert werden sollen.

Diese Aufgabe wird durch die Merkmale im Kennzeichen des Anspruchs 1 gelöst.

Durch die Verwendung solcher neuartiger τ-boridischer Nickel-basis-Hartlegierungen wird ein sehr guter Verschleißschutz in Verbindung mit Korrosionsschutz erzielt. Dabei werden nicht nur die hohen Kosten für althergebrachte Materialien entscheidend verringert, sondern es bieten sich auch neue Möglichkeiten des Auftragens von Titan-, Niob-, bzw. Tantalmetall-ähnlichen Schutzschichten auf Trägermaterialien, deren Beschichtung nach dem Stand der Technik bislang auf Schwierigkeiten stieß.

Die erfindungsgemäß verwendeten τ-boridischen Legierungen gehören zu den Vierstoffsystemen

a) Ni-Cr-Ti-B
b) Ni-Cr-Ta-B
c) Ni-Cr-Nb-B.

Die komplexen Boride des « τ-Typs » treten auf bei den Zusammensetzungen :

| | |
|---|---|
| a) Nickel 48-72 Atom % | Chrom 20-25 Atom % |
| Titan 4-16 Atom % | Bor 4-20 Atom % |
| b) Nickel 45-73 Atom % | Chrom 20-25 Atom % |
| Tantal 3-15 Atom % | Bor 3-21 Atom % |
| c) Nickel 60-72 Atom % | Chrom 20-25 Atom % |
| Niob 3-17 Atom % | Bor 4-18 Atom % |

Die Anwendungsmöglichkeiten der besagten τ-Boride des Niobs, Titans und Tantals im Verschleiß- und Korrosionsschutz beschränken sich nicht allein auf die bekannten Methoden zur Oberflächenbeschichtung von Bauteilen aus üblichen Grundwerkstoffen. Es ist auch denkbar, daß in Bedarfsfällen Gußteile aus den τ-Borid-haltigen Legierungen hergestellt werden. Bevorzugt wird jedoch die neuartige Legierung als Auftragswerkstoff eingesetzt, wofür thermische Spritzverfahren wie Flammspritzen und Plasmaspritzen sowie Plasma-Auftragsschweißen angewendet werden können.

Darüber hinaus kann man thermisch aufgespritzte Schutzschichten, insbesondere autogen aufgetragene Schichten mit τ-Boriden mit geringeren Qualitätsanforderungen nachträglich weiterbehandeln und dadurch veredeln, daß man die Oberflächenschichten der Werkstücke mittels Laser- oder Elektronenstrahl-Hochvakuumtechnik aufschmilzt und die Auftragsschichten dadurch zu noch homogeneren Verschleiß- und Korrosionsschutzschichten umwandelt.

Im allgemeinen werden in der Technik metallische Basiswerkstoffe als Schichtträger (Substrat) verwendet ; es ist allerdings auch denkbar, daß in besonderen Fällen ( — im weitesten Sinne — auch) keramische Substrate vorteilhaft mit einer Auftragsschutzschicht aus τ-Borid-enthaltenden Legierungen belegt werden, um chemischen Korrosionsangriff in bestimmten Fällen zu verhindern.

Die Oberflächenarmierung von Bauteilen mit τ-Borid-Schichten empfiehlt sich z. B. für Reaktionsbehälter, Kolonnen, Ruhrbehälter, Rührwerke, Armaturen, Pumpen und Rohrleitungen in der chemischen Industrie, sofern diese Bauteile geometrisch spritzgerecht beschaffen sind. Auch die Schutzarmierung von Meßsonden, Thermofühlern, Heiz- und Kühlflächen im chemischen Apparatebau, aber auch in anderen Fällen der Wärmeübertragung sind Einsatzgebiete der neuartigen τ-Borid-Beschichtungen vorhanden.

Für die Herstellung geeigneter Ausgangsmaterialien für die τ-Borid-Legierungen des Titans, Niobs und Tantals bieten sich Gußverfahren an, die von den Schmelzen der Komponenten ausgehen. Bevorzugt ist die Herstellung von Legierungspulver durch Verdüsen der Schmelze in einer Inertgasatmosphäre.

Aus einer solchen Vakuum-Schmelze/Schutzgas-Verdüsungsanlage stammen die Spritzkörnungen der -Borid-haltigen Nickel-legierungen, die für die nachstehenden Tests und Beschichtungsversuche ausgewählt wurden.

Alternativ dazu wurden auch Gußteile aus den Legierungsschmelzen hergestellt, um z. B. Korrosionstests oder Härtemessungen an den Proben messen zu können.

Die Beständigkeit der Spritzschichten gegen Abrasions- und Gleitverschluß wurde mit der Modellapparatus Stift-Scheibe geprüft.

Die Spritzschichten wurden in potentiodynamischen Versuchen auf ihre Korrosionsbeständigkeit untersucht. Als Substrat diente ein einfacher Baustahl St 37. Als Korrosionsmedien dienten $H_2SO_4$, $HNO_3$ und HCl.

Eigenschaften der Nickelbasislegierungen mit τ-Borid-Phasen

Gegossene τ-Borid-Nickelbasis-Hartlegierungen sind bei gleicher Härte wesentlich duktiler als konventionelle Hartlegierungen. τ-Borid-Hartlegierungen erreichen eine Härte von bis zu 58 HRC oder 900 HV 50. Anders als bei anderen Hartlegierungen treten in den Ecken von Härteeindrücken auch bei sehr harten Qualitäten keine Risse auf. Die eigenschaftsbestimmenden Hartphasen liegen fein und gleichmäßig verteilt im Gußgefuge vor. Die Schmelztemperaturen allen untersuchten Legierungen liegen in dem Intervall von 1 000 bis 1 250 °C. Damit prädestinieren sich diese Werkstoffe für die spritztechnische Verarbeitung.

Gegossene τ-Borid-Hartlegierungen besitzen eine ausgezeichnete Beständigkeit gegen $H_2SO_4$ und $HNO_3$. Gegen HCl sind nur die Tantal-reichen Qualitäten beständig.

Aspekte der spritztechnischen Verarbeitung

Schutzgasverdüste Pulver τ-Borid-haltiger Nickelbasishartlegierungen können mit dem Flamm- und Plasmaspritzen an Atmosphäre zu dichten, hervorragend haftenden (Haftzugfestigkeit 40 bis 58 N/mm²) Spritzschichten verarbeitet werden.

Legierungen, die im gegossenen Zustand eine Härte über 500 HV 50 besitzen, zeigen als gespritzte Schichten eine hervorragende Resistenz gegen die genannten Verschleißarten.

In allen Tests zeigten sich die Plasma-gespritzten Schichten den Flammspritzschichten überlegen. Gleichwohl waren alle Schichten über die gesamte Versuchsdauer dicht, so daß kein Anglafe auf den Grundwernstoff erfolgte.

Thermische Spritzschichten aus τ-Borid-haltigen Hartlegierungen verhalten sich im Korrosionstest genauso wie gegossene Werkstoffe. Sie bilden einen ausgezeichneten Schutz gegen Salpeter- und Schwefelsäure. Für den Einsatz gegen Salzsäure können dagegen nur die höher Tantal-haltigen Qualitäten verwendet werden.

Grundlegend neu ist bei τ-Borid-Spritzschichten der gleichzeitige Schutz gegen Verschleiß und Korrosion auf einem hohen Niveau. Die Eigenschaften der Legierungen können dabei je nach dem Anwendungsschwerpunkt (Verschleiß und/oder Korrosion) über die Zusammensetzung genau auf die Anforderungen abgestimmt werden.

Alle τ-Borid-Spritzschichten bilden bei hohen Temperaturen an Luft nach kurzer Zeit dichte Oxidschichten, wodurch die Werkstoffe ausgesprochen zunderbeständig sind.

Flammgespritzte Schichten können in ihren Eigenschaften durch das Einschmelzen mit einem Laser nochmals gesteigert werden.

Dabei ergibt sich ein schmelzmetallurgischer Verbund zum Substrat. Der Einbrand bzw. die Aufmischung mit dem Grundwerkstoff ist dabei in äußerst engen Toleranzen variabel. Durch diese Veredelung ergeben sich hochharte, aber materialsparende — weil dünne — Verschleißschutzschichten, die in vielen Fällen ohne jede Nachbearbeitung wie Schleifen etc. verwendet werden können.

Pulverförmige τ-boridische Nickelhartlegierungen mit einem hohen Anteil an Refraktärmetallen, wie zum Beispiel Niob und Tantal sind aber auch durch heißisostatisches Pressen (HIP) zu verarbeiten. Aus solchen pulverförmigen Legierungen gefertigte HIP-Teile zeichnen sich ebenfalls durch die Eigenschaften und Besonderheiten dieser neuen τ-Legierungen aus.

HIP-Teile haben homogenes, feinkörniges, seigerungs- und porenfreies Gefüge und hervorragende Ausbildung und Verteilung von Hartphasen insbesondere τ-Phasen, in der metallischen Matrix. Von daher sind auch stark verbesserte mechanische Werkstoffdaten, hohe Thermoschock-Resistenz und gute Bearbeitbarkeit gewährleistet.

### Beispiel 1

Für die erfindungsgemäße Anwendung einer Ni-Legierung mit τ-Borid-Phase wurde ein Tantal-τ-Borid-Spritzpulver der Körnung 5,6 bis 45 μm bestehend aus 60,14 At-% Ni, 21,0 At-% Cr, 13,45 At-% Ta und 5,41 At-% B mit einer METCO-5P-Flammspritzanlage auf St-37-Teststreifen 100 × 20 × 2 mm mittels $H_2/O_2$-Flamme aus 100 mm Spritzabstand mit einer Auftragsrate von ca. 2 kg/h aufgetragen.

Die Teststreifen wurden metallografisch und auf Härte bzw. Verschleißfestigkeit sowie auf Biegeverhalten untersucht. Man maß eine Microhärte von 900 bis 1 100 HV 0,05 auf der Oberfläche der τ-Borid-Beschichtung, die Haftung der Schicht auf dem Substrat war zufriedenstellend.

Metallografische (Quer-) Schliffe zeigten einen gleichmäßigen, porenfreien Schichtaufbau. Für Korrosionstests waren diese Probestreifen ungeeignet, weshalb hierfür auf Gußproben zurückgegriffen werden muß.

### Beispiel 2

Um einen weiteren Anwendungsfall zu überprüfen, wurden Teststreifen der in Beispiel 1 genannten Art mit der dort genannten Tantal-τ-Borid-Legierung durch Plasma-Auftragsschweißen beschichtet.

Mit einer Pulverkörnung 45-150 μm wurden einlagige und zweilagige Schweißproben hergestellt. Die starke Erwärmung des Substrats bei diesem Auftragsverfahren verursachte in der ersten Schicht eine merkliche Diffusionsdurchmischung von Schicht und Substrat, so daß man sinnvollerweise zur Erzielung einer brauchbaren Korrosions- und Verschleißschutzschicht einen mindestens zweilagigen Schichtaufbau vorziehen sollte. Die metallografischen (Quer-) Schliffe zeugten von hervorragender Beschaffenheit, d. h. einer porenfreien Beschichtung bei sehr guter Haftung der Schicht auf dem Substrat. Der Härtetest auf den Oberflächenschichten ergab für die einlagige und zweilagige Schweißauftragsschicht Härtewerte von 660 bzw. 780 HV 0,05.

### Beispiel 3

Für die Untersuchung des Korrosionsverhaltens waren die in den vorgenannten Beispielen 1 + 2 erhaltene Teststreifen ungeeignet. Der Korrosionstest wurde daher mit kompakten Gußstücken durchgeführt. Dazu wurden die τ-Borid-Legierungsproben jeweils 30 min. in erwärmtem Königswasser behandelt und danach der Gewichtsverlust bestimmt. Die im Beispiel 1 verwendete Tantal-τ-Borid-Legierung zeigte nach der Säurebehandlung einen relativen Gewichtsverlust von weniger als 0,3 %.

Wenngleich die im Beispiel 1 ausgeführte atmosphärische (= offene) Flammspritz-Beschichtung mit Tantal-τ-Borid-Überzügen als Ersatz für reine Tantalbeschichtung eine wesentliche Erweiterung der Anwendungsmöglichkeiten darstellt — im Vergleich zu den aufwendigen Plasma-Spritz-verfahren für reines Tantal — so ist doch die Plasma-Spritz-beschichtung mit τ-Borid-Legierungen in besonderen Fällen äußerst vorteilhaft. Eine solcha besondere Anwendungsvariante ist. z. B. die Innenbeschichtung von Rohren mit Korrosions- und Erosions-festen τ-Borid-Schutzschichten mit Hilfe der neuartigen Innen-Plasma-Brenner-Typen SM-F (1-3) der Firma Plasma-Technik AG, Schweiz. Das vorzügliche Fließverhalten der schmelzverdüsten τ-Borid-Pulver begünstigt die Spritzbeschichtung in Rohren mit Innendurchmessern bis herab zu 20 mm. Mit den bekannten Verfahren des Standes der Technik ist eine Lösung dieser Aufgabe nicht möglich, denn die bekannte CVD-Beschichtung führt lediglich zu sehr dünnen Überzügen der reinen Metalle Niob und Tantal, die ihrerseits zwar korrosions- aber nicht abriebfest sind.

## Patentansprüche

1. Verfahren zur Herstellung von Oberflächenschutzschichten mit Niob, Tantal und/oder Titan auf metallischen Trägerwerkstoffen durch thermisches Spritz- und Auftragsschweißen, dadurch gekennzeichnet, daß τ (Tau)-Borid-haltige Legierungen auf Nickelbasis aus den Vierstoffsystemen
    a) Nickel-Chrom-Titan-Bor,
    b) Nickel-Chrom-Tantal-Bor, und
    c) Nickel-Chrom-Niob-Bor
verwendet werden, wobei die Legierungen folgende Zusammensetzung haben :
    a) Nickel 48-72 Atom %        Chrom 20-25 Atom %
       Titan 4-16 Atom %          Bor 4-20 Atom %
    b) Nickel 45-73 Atom %        Chrom 20-25 Atom %
       Tantal 3-15 Atom %        Bor 3-21 Atom %
    c) Nickel 60-72 Atom %        Chrom 20-25 Atom %
       Niob 3-17 Atom %         Bor 4-18 Atom %

2. Verfahren nach Anspruch 1, dadurch gekennzeichnet, daß das Auftragen durch Flammspritzen mit autogener Flammerzeugung erfolgt.

3. Verfahren nach den Ansprüchen 1 und 2, dadurch gekennzeichnet, daß ein elektrisches Plasma-Spritzverfahren verwendet wird.

4. Verfahren nach den vorhergehenden Ansprüchen, dadurch gekennzeichnet, daß die τ-Borid-haltigen Auftragsschichten nachträglich mittels Laser-, Elektronenstrahl- oder HF-Induktions-Energie im Vakuum oder unter Schutzgas thermisch behandelt werden.

5. Verfahren nach den vorhergehenden Ansprüchen, dadurch gekennzeichnet, daß ein keramischer Trägerwerkstoff verwendet wird.

6. Verwendung von τ-Boriden des Titans, Niobs und Tantals, die die folgende Zusammensetzung haben :
    a) Nickel 48-72 Atom %        Chrom 20-25 Atom %
       Titan 4-16 Atom %          Bor 4-20 Atom %
    b) Nickel 45-73 Atom %        Chrom 20-25 Atom %
       Tantal 3-15 Atom %        Bor 3-21 Atom %
    c) Nickel 60-72 Atom %        Chrom 20-25 Atom %
       Niob 3-17 Atom %         Bor 4-18 Atom %
zur Herstellung von Gußteilen für die Korrosions- und Verschleißschutztechnik.

## Claims

1. Process for preparing surface protective layers with niobium, tantalum and/or titanium on metal substrate materials by thermal injection and build-up welding, characterised in that τ(tau)-boride-containing alloys based on nickel selected from the four-component systems
    a) nickel-chromium-titanium-boron,
    b) nickel-chromium-tantalum-boron and
    c) nickel-chromium-niobium-boron
are used, the alloys having the following compositions :
    a) nickel 48-72 atom %        chromium 20-25 atom %
       titanium 4-16 atom %       boron 4-20 atom %
    b) nickel 45-73 atom %        chromium 20-25 atom %
       tantalum 3-15 atom %      boron 3-21 atom %

c) nickel 60-72 atom %  
niobium 3-17 atom %  
chromium 20-25 atom %  
boron  4-18 atom %

2. Process according to claim 1, characterised in that the material is applied by flame injection with autogenic flame production.

3. Process according to claims 1 and 2, characterised in that an electrical plasma-injection process is used.

4. Process according to the preceding claims, characterised in that the $\tau$-boride-containing applied layers are subsequently subjected to thermal treatment by means of laser, electron radiation or HF-induction energy in vacuo or under protective gas.

5. Process according to the preceding claims, characterised in that a ceramic substrate material is used.

6. Use of $\tau$-borides of titanium, niobium and tantalum, having the following composition :

a) nickel 48-72 atom %  
titanium 4-16 atom %  
chromium 20-25 atom %  
boron  4-20 atom %

b) nickel 45-73 atom %  
tantalum 3-15 atom %  
chromium 20-25 atom %  
boron  3-21 atom %

c) nickel 60-72 atom %  
niobium 3-17 atom %  
chromium 20-25 atom %  
boron  4-18 atom %

for the production of cast parts for corrosion-proofing and protection against wear.

**Revendications**

1. Procédé de préparation de couches de protection des surfaces avec du niobium, du tantale et/ou du titane sur des matériaux de support métalliques par soudage par pulvérisation et par superposition, caractérisé en ce qu'on utilise des alliages contenant du borure $\tau$ à base de nickel constitués des quatre systèmes suivants :

a) Nickel-Chrome-Titane-Bore  
b) Nickel-Chrome-Tantale-Bore  
c) Nickel-Chrome-Nobium-Bore,

les alliages ayant les compositions suivantes :

| | |
|---|---|
| a) Nickel | 48-72 atomes % |
| Titane | 4-16 atomes % |
| Chrome | 20-25 atomes % |
| Bore | 4-20 atomes % |
| b) Nickel | 45-73 atomes % |
| Tantale | 3-15 atomes % |
| Chrome | 20-25 atomes % |
| Bore | 3-21 atomes % |
| c) Nickel | 60-72 atomes % |
| Niobium | 3-17 atomes % |
| Chrome | 20-25 atomes % |
| Bore | 4-18 atomes % |

2. Procédé suivant la revendication 1, caractérisé en ce que l'application s'effectue par pulvérisation dans une flamme avec une production de flammes autogènes.

3. Procédé suivant les revendications 1 et 2, caractérisé en ce qu'on utilise un procédé de pulvérisation dans un plasma électrique.

4. Procédé suivant les revendications précédentes, caractérisé en ce que les couches de superposition contenant du borure $\tau$ sont ultérieurement traitées thermiquement au moyen d'une énergie laser, de faisceau électronique ou d'induction HF sous vide ou sous un gaz protecteur.

5. Procédé suivant les revendications précédentes, caractérisé en ce qu'on utilise un matériau de support céramique.

6. Utilisation de borures $\tau$ du titane, du niobium et du tantale, qui ont la composition suivante :

| | |
|---|---|
| a) Nickel | 48-72 atomes % |
| Titane | 4-16 atomes % |
| Chrome | 20-25 atomes % |
| Bore | 4-20 atomes % |
| b) Nickel | 45-73 atomes % |
| Tantale | 3-15 atomes % |
| Chrome | 20-25 atomes % |
| Bore | 3-21 atomes % |
| c) Nickel | 60-72 atomes % |
| Niobium | 3-17 atomes % |
| Chrome | 20-25 atomes % |
| Bore | 4-18 atomes % |

pour la fabrication de pièces coulées pour la technique de protection contre la corrosion et l'usure.